# EUROPEAN PATENT SPECIFICATION

(11) **EP 3 754 875 B1**
(45) Date of publication and mention of the grant of the patent: **19.07.2023**
(21) Application number: 18906336.5
(22) Date of filing: 15.02.2018
(51) Int. Cl.: H04L 1/16, H04L 1/18

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 23.12.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/005347
(87) International publication number: WO 2019/159298

(56) References cited:
- WO-A1-2011/155344
- HUAWEI ET AL: "HARQ timing, multiplexing, bundling, processing time and number of processes", 3GPP DRAFT; R1-1717075, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051340266, Retrieved from the Internet: URL:http://www.3gpp.org/ftp/Meetings_3GPP_ SYNC/RAN1/Docs/ [retrieved on 2017-10-08]
- ERICSSON: "On HARQ Codebook", 3GPP TSG-RAN WG1 NR Ad-Hoc#2 R1-1711510, June 2017 (2017-06), XP051300695,
- SAMSUNG: "Corrections on HARQ Feedback", 3GPP TSG-RAN WG1 #AH 1801, R1-1800453, January 2018 (2018-01), XP051384879,
- INTEL CORPORATION: "On DL/UL Scheduling and HARQ management", 3GPP TSG-RAN WG1#91, R1-1720095, December 2017 (2017-12), XP051369776,
- LG ELECTRONICS: "Discussion on handling collisions between n+4 and n+3", 3GPP TSG RAN WG1 #88, R1-1702414, February 2017 (2017-02), XP051209568,

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE-Advanced (LTE-A), Future Radio Access (FRA), 4G, 5G, 5G+ (plus), New RAT (NR), and LTE Rel. 14 and 15-) are also studied.

Legacy LTE systems (e.g., LTE Rel. 8 to 13) perform communication on Downlink (DL) and/or Uplink (UL) by using subframes (also referred to as, for example, TTIs: Transmission Time Intervals) of 1 ms. The subframe is a transmission time unit of 1 channel-coded data packet, and is a processing unit of scheduling, link adaptation and retransmission control (HARQ: Hybrid Automatic Repeat reQuest).

Furthermore, in the legacy LTE systems (e.g., LTE Rel. 8 to 13), a user terminal transmits Uplink Control Information (UCI) by using an uplink control channel (e.g., PUCCH: Physical Uplink Control Channel) or an uplink shared channel (e.g., PUSCH: Physical Uplink Shared Channel). A configuration (format) of the uplink control channel will be referred to as, for example, a PUCCH format.

An existing method for ACK size determination is disclosed in HUAWEI ET AL: "HARQ timing, multiplexing, bundling, processing time and number of processes", 3GPP DRAFT; R1-1717075 (2017-10-08).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (also referred to simply as NR below) that a user terminal semi-statically or dynamically determines a size of a transmission acknowledgement signal (also referred to as HARQ-ACK, ACK/NACK or A/N), and controls feedback of the transmission acknowledgement signal. An HARQ-ACK size will be also referred to as a codebook, a codebook size or a bit sequence size.

In a case where a mode of semi-statically determining the HARQ-ACK codebook is configured, the UE fixedly determines HARQ-ACK bits to be fed back based on information notified by a higher layer signaling. For example, the UE performs transmission using codebooks corresponding to HARQ-ACKs for all DL transmission (e.g., PDSCHs) that are likely to be scheduled in a given range. In this case, the UE feeds back NACK for a PDSCH that is not scheduled in the given range.

Thus, when HARQ-ACK codebooks are determined irrespectively of the number of times of DL transmission to be scheduled, and, even when the number of times of DL transmission to be actually scheduled is small (e.g., one or two), it is necessary to transmit a large number of HARQ-ACK bits at all times. Therefore, it is necessary to generate a large number of HARQ-ACKs irrespectively of the number of times of DL transmission to be scheduled, and therefore there is a risk that a processing load of the UE increases, and a throughput lowers and/or communication quality deteriorates.

It is therefore one of objects of the present disclosure to provide a user terminal and a radio communication method that can suppress an increase in a processing load of a UE even when an HARQ-ACK codebook is semi-statically configured.

### Solution to Problem

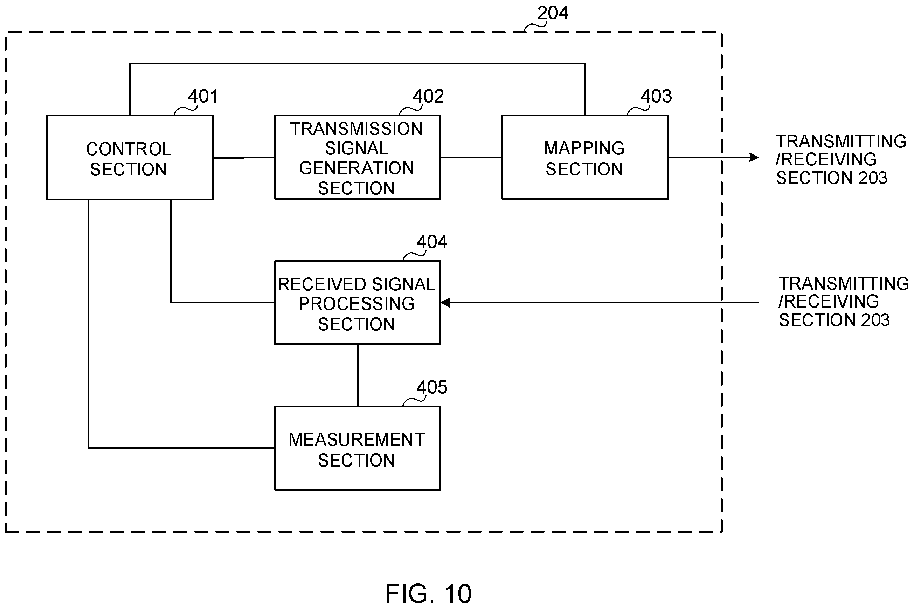

The invention is defined by the appended claims. The following embodiments of feedback size control as depicted in fig. 10 are used to explain the claimed invention but do not form part of it. Other embodiments discussed below are not embodiments of the claimed invention.

### Advantageous Effects of Invention

According to the present invention, it is possible to suppress an increase in a processing load of a UE even when an HARQ-ACK codebook is semi-statically configured.

### Brief Description of Drawings

Fig. 1 is a diagram for explaining ACK/NACK feedback for a plurality of scheduled PDSCHs.
Figs. 2A, 2B, 2C and 2D are diagrams illustrating an example of PDSCH scheduling in 1 slot.
Fig. 3 is a diagram illustrating a table that specifies PDSCH candidates by PDSCH scheduling.
Fig. 4 is a diagram for explaining exclusion of PDSCH candidates in a case where a UL symbol is configured to 1 slot.
Fig. 5 is a diagram for explaining PDSCH candidates numbered to generate ACK/NACK bits.
Fig. 6 is a diagram illustrating one example of a schematic configuration of a radio communication system according to the present embodiment.
Fig. 7 is a diagram illustrating one example of an overall configuration of a radio base station according to the present embodiment.
Fig. 8 is a diagram illustrating one example of a function configuration of the radio base station according to the present embodiment.
Fig. 9 is a diagram illustrating one example of an overall configuration of a user terminal according to the present embodiment.
Fig. 10 is a diagram illustrating one example of a function configuration of the user terminal according to the present embodiment.
Fig. 11 is a diagram illustrating one example of hardware configurations of the radio base station and the user terminal according to the present embodiment.

### Description of Embodiments

It is studied for NR that a user terminal semi-statically or dynamically determines an HARQ-ACK size (HARQ-ACK codebook), and transmits HARQ-ACK using a PUSCH. For example, a base station notifies the UE of an HARQ-ACK codebook determination method by a higher layer signaling.

When a mode of semi-statically determining the HARQ-ACK codebook is configured (when, for example, a type 1 is determined), the UE determines, for example, the number of HARQ-ACK bits based on a configuration configured by the higher layer signaling. The configuration (higher-layer configuration) configured by a higher layer signaling may be, for example, a maximum number of times of DL transmission (e.g., PDSCHs) scheduled over a range associated with an HARQ-ACK feedback timing.

The range associated with the HARQ-ACK feedback timing corresponds to at least one (e.g., all) of a space, a time and a frequency (freq). Furthermore, the range associated with the HARQ-ACK feedback timing will be also referred to as an HARQ-ACK bundling window, an HARQ-ACK feedback window, a bundling window or a feedback window.

On the other hand, when a mode of dynamically determining the HARQ-ACK codebook is configured (when, for example, a type 2 is determined), the UE determines, for example, the number of HARQ-ACK bits based on a bit indicated by a DL Assignment Index (DAI: Downlink Assignment Indicator (Index)) field included in downlink control information (e.g., DL assignment).

Furthermore, NR supports a PUCCH format used for transmission of UCI that is equal to or less than a given number of bits, and a PUCCH format used for transmission of UCI that is larger than the given number of bits as an uplink control channel configuration (PUCCH format) used for transmission of HARQ-ACK. The PUCCH format that is used for transmission of the UCI that is equal to or less than the number of given bits (e.g., up to 2 bits) may be referred to as a PUCCH format 0 or a PUCCH format 1. The PUCCH format that is used for transmission of the UCI that is larger than the number of given bits (e.g., more than 2 bits) may be referred to as PUCCH formats 3 to 5.

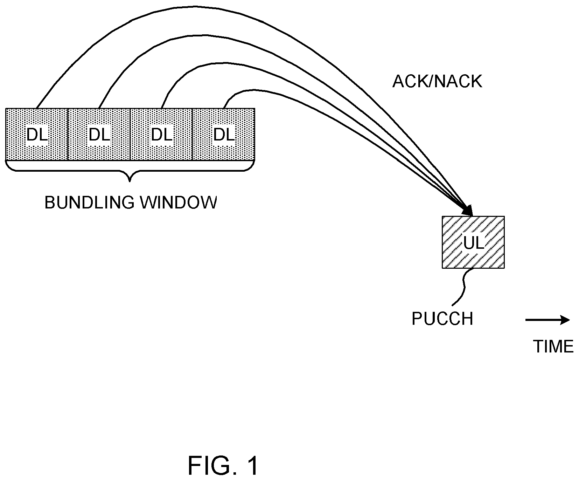

Fig. 1 is a diagram illustrating one example of feedback control of HARQ-ACK that uses a PUCCH. In this example, portions to which "DL" or "UL" is assigned indicate given resources (e.g., time/frequency resources), and a duration of each portion corresponds to an optional time unit (e.g., one or a plurality of slots, mini slots, symbols or subframes). The same applies to following examples.

In a case in Fig. 1, the UE transmits A/Ns for PDSCHs (four DL resources in this case) that are scheduled in a given range (bundling window) associated with feedback of HARQ-ACK by using given uplink control channel resources (PUCCH resources). A feedback timing of HARQ-ACK for each PDSCH may be configured to be indicated to the UE by downlink control information (DL assignment) for scheduling each PDSCH.

When the mode of semi-statically determining an HARQ-ACK codebook, i.e., the type 1 is determined by the UE, the UE feeds back HARQ-ACK by using the number of bits that takes into account HARQ-ACKs for all PDSCHs that are likely to be scheduled in the given range (bundling window). That is, irrespectively of the number of PDSCHs to be scheduled or the number of pieces of DCI for scheduling the PDSCHs, the UE controls HARQ-ACK feedback based on a codebook size calculated in advance according to a higher layer parameter.

More specifically, the UE supposes that all PDSCHs included in the bundling window are scheduled, and generates HARQ-ACK bits for all PDSCHs. Consequently, it is possible to semi-statically configure the HARQ-ACK codebook irrespectively of the number of PDSCHs to be scheduled or the number of pieces of DCI for scheduling the PDSCHs.

As described above, while it is studied to semi-statically or dynamically determine an HARQ-ACK size (HARQ-ACK codebook), and transmit HARQ-ACK, it is demanded to take into account that terminal capability configured to the UEs is various.

It is also supposed that the number of PDSCHs (PDSCH candidates) that the UE can receive in, for example, a bundling window of 1 slot is limited to one. When this UE determines the type 1 (semi-static determination of the HARQ-ACK codebook), feeding back HARQ-ACK using the number of bits that takes into account HARQ-ACKs for all PDSCHs that are likely to be scheduled in the UE leads to an increase in unnecessary processing, and an unnecessary increase in power consumption of a terminal.

In view of these circumstances, the inventors of the present invention have conceived ACK/NACK feedback control that takes terminal capability of a user terminal into account. For example, the number of ACK/NACK bits is controlled based on the terminal capability of the user terminal.

By generating ACK/NACK bits based on the terminal capability of the user terminal (e.g., the number of receivable PDSCHs in a bundling window), it is possible to prevent unnecessary ACK/NACK bit generating processing, and suppress battery consumption of the UE. Furthermore, it is possible to appropriately perform ACK/NACK feedback between the user terminal and a radio base station (gNB).

An embodiment of the present disclosure will be described in detail below.

In the following embodiment, HARQ-ACK may be read as UCI, or may be read UCI of other types such as a Scheduling Request (SR) and Channel State Information (CSI). Furthermore, in this description, "data", a "data channel (e.g., PUSCH)" and a "data channel resource" may be interchangeably read.

### <Numbering of PDSCH Candidates>

First, numbering of PDSCH candidates that can be scheduled in a given bundling window will be described with reference to the drawings prior to description of the method for determining the number of ACK/NACK bits. In this regard, 1 slot including 14 symbols is assumed as one example of the bundling window.

### «PDSCH Candidate»

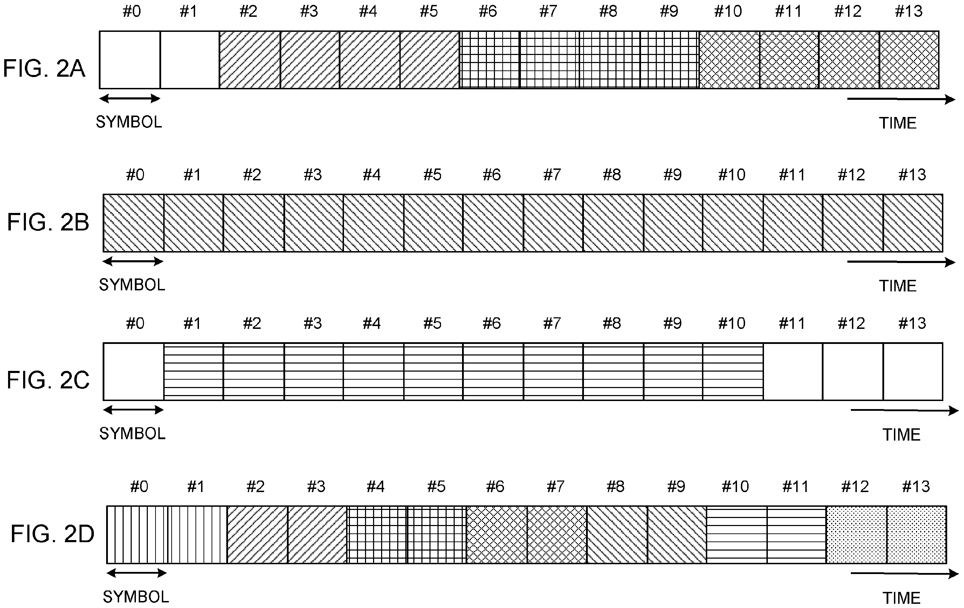

Figs. 2A to 2D illustrate examples of PDSCH candidates in 1 slot. In the example illustrated in Fig. 2A, three PDSCH candidates (slots #2 to #5, slots #6 to #9 and slots #10 to #13) are allocated. In the example illustrated in Fig. 2B, one PDSCH candidate (#0 to #13) is allocated over 1 slot.

In the example illustrated in Fig. 2C, one PDSCH candidate (#1 to #10) is allocated. In the example illustrated in Fig. 2D, seven PDSCH candidates (#0 and #1, #2 and #3, #4 and #5, #6 and #7, #8 and #9, #10 and #11 and #12 and #13) are allocated.

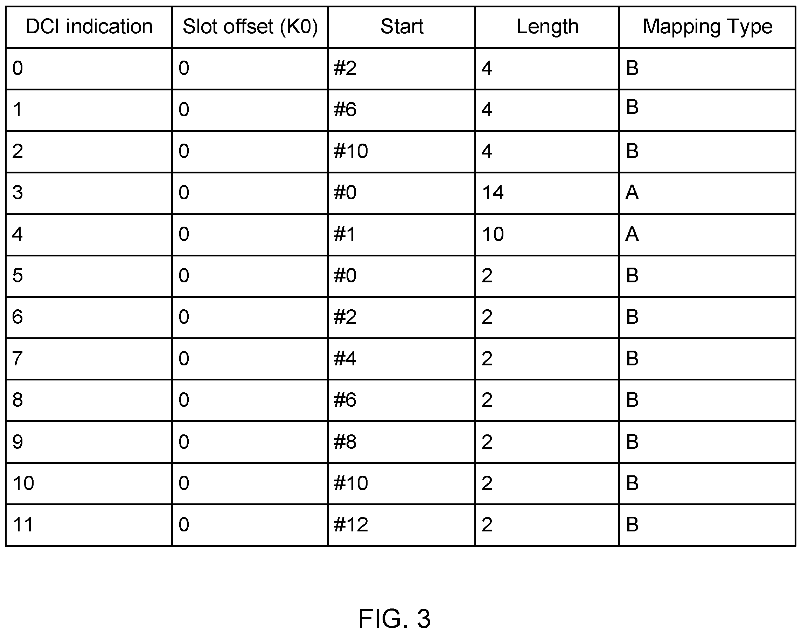

The PDSCH candidates illustrated in Figs. 2A to 2D are notified from a radio base station to a user terminal by, for example, information of a table format illustrated in Fig. 3. An L1 signaling (RRC signaling) may be used for this notification.

A DCI indication is allocated to each PDCCH candidate. Each PDSCH candidate is specified by a slot offset K0 (DCI slot timing K1), a start symbol number, a length and a mapping type.

The mapping type specifies mapping whose time unit is a slot, and mapping whose unit is a time different from the slot. For example, a mini slot is a time unit shorter than the slot. The mini slot may include a smaller number of symbols (e.g., 1 to (slot length - 1) symbols such as 2 or 3 symbols) than that of the slot. Mini slots in the slot may be applied identical numerologies (e.g., a subcarrier spacing and/or a symbol length) to those of the slot, or may be applied different numerologies (e.g., a higher subcarrier spacing than that of the slot and/or a shorter symbol length than that of the slot) from those of the slot.

For example, the mini slot may be a PDSCH or a PUSCH that includes 2, 4 or 7 symbols, and whose start symbol position can be flexibly configured. On the other hand, a PDSCH that is not the mini slot may be a PDSCH whose start symbol position is a zeroth to third symbol in the slot, and that has a given symbol length or more. Furthermore, a PUSCH that is not the mini slot may be a PDSCH whose start symbol position is a zeroth symbol in the slot, and that has a given symbol length or more.

The PDSCH and the PUSCH that are not the mini slots may be referred to as a PDSCH/PUSCH mapping type A, and the PDSCH and the PUSCH that are the mini slots may be referred to as a PDSCH/PUSCH mapping type B. Furthermore, a DMRS may be inserted at a different position according to a PDSCH/PUSCH mapping type. Furthermore, which PDSCH/PUSCH mapping type is used may be configured by a higher layer signaling such as an RRC signaling, may be notified by DCI or may be recognized based on a combination of both.

### <<Exclusion of Scheduling Element>>

A DL/UL configuration is taken into account for the above PDSCH candidates. More specifically, a symbol configured to UL in the DL/UL configuration is taken into account. The radio base station (gNB) cannot schedule a PDSCH by using a slot indicated to UL (in an overlapping manner). Consequently, it is possible to exclude PDSCH candidates including the symbol configured to UE from a scheduling target.

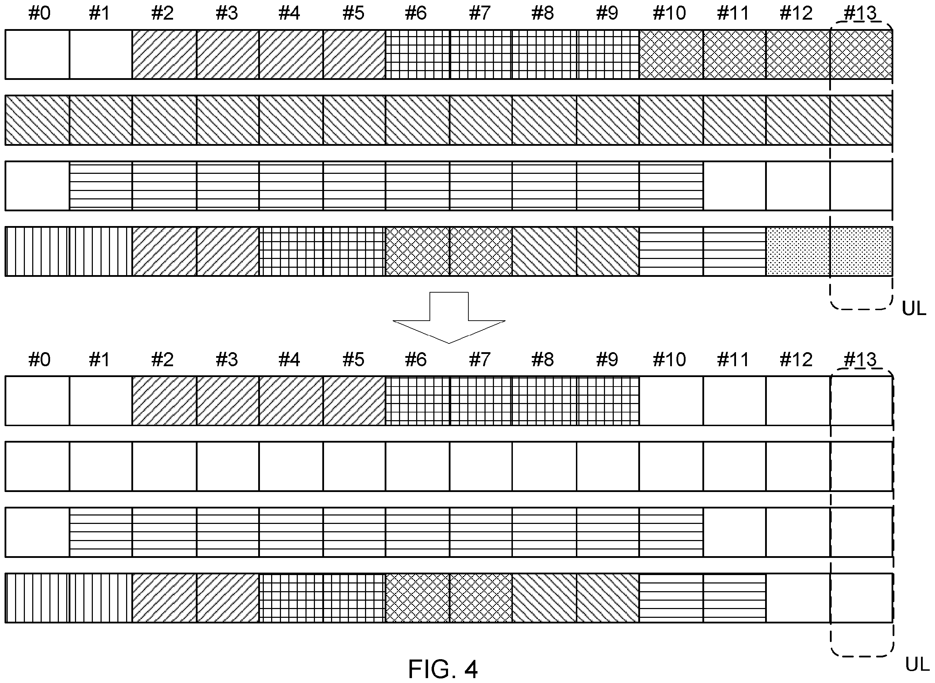

Fig. 4 illustrates an example where PDSCH candidates are excluded. In this regard, it is assumed that the slot #13 of the PDCCH candidates illustrated in Figs. 2A to 2D is configured to UL (an upper drawing in Fig. 4). Consequently, it is possible to exclude the PDSCH candidates including the slot #13 from the scheduling target (a lower drawing in Fig. 4).

### <<Numbering>>

Next, PDSCH candidates that are likely to be scheduled are numbered. For example, it is possible to perform numbering according to a following algorithm.

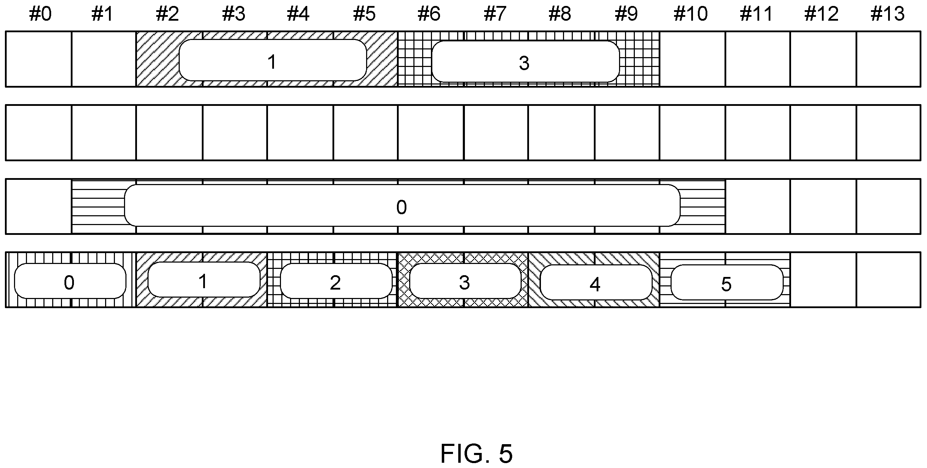

First, "0" is assigned to a head PDSCH candidate (a first PDSCH candidate in a fourth slot from the top in Fig. 5). Next, when a last symbol (end symbol) of the head PDSCH candidate is a reference position, and there is a PDSCH candidate whose start symbol position comes before the last symbol "0" is assigned to this PDSCH candidate (a PDSCH candidate in a third slot from the top in Fig. 5) likewise.

Next, a PDSCH candidate whose end symbol comes earlier is searched among PDSCH candidates that are not numbered, and "1" is assigned to this PDSCH candidate (a PDCCH candidate in the fourth slot from the top in Fig. 5). Furthermore, when an end symbol of the PDSCH candidate to which "1" has been assigned is a reference position, and there is a PDSCH candidate whose start symbol comes before the end symbol, "1" is assigned to this PDSCH candidate (a PDSCH candidate in a first slot from the top in Fig. 5) likewise.

This numbering is repeated to assign numbers to all PDSCH candidates that are likely to be scheduled (see Fig. 5). As a result of this numbering, there are PDSCH candidates to which the same numbers are assigned. It is assumed that the PDSCH candidates to which the same numbers have been assigned are not concurrently scheduled. Hence, in the example illustrated in Fig. 5, the number of PDSCH candidates to be scheduled is "6" at maximum.

### <Method For Determining the Number of ACK/NACK Bits>

Next, the method for determining the number of ACK/NACK bits will be described. In this regard, a variable N indicates a maximum number of PDSCHs (PDSCH candidates) that the user terminal can receive in 1 slot. Furthermore, a variable M indicates a maximum number of schedulable (occasions for) PDSCH candidates that has been obtained by the above numbering.

The UE determines a minimum numerical value among N and M as the numbers of HARQ-ACK bits. Consequently, even when an HARQ-ACK codebook is semi-statically configured, it is possible to suppress an increase in a processing load of the UE.

For example, in a case of the UE having terminal capability that makes it possible to receive one PDSCH (PDSCH candidate) in 1 slot, N = 1 holds. Hence, even when numbering is performed as illustrated in Fig. 5 (even when the maximum number of PDSCH candidates that are scheduled in 1 slot is 6), the number of ACK/NACK bits to be determined is 1. Consequently, it is possible to prevent unnecessary ACK/NACK bit generating processing, reduce an overhead relative to UCI feedback, and, furthermore suppress transmission power, too, so that it is possible to suppress battery consumption of the UE. Furthermore, it is possible to appropriately perform ACK/NACK feedback between the user terminal and the radio base station (gNB).

The above variable N may be a natural number that indicates the number of PDSCHs that the user terminal can receive in 1 slot. However, the variable N may be configured as 1 bit, and configured to indicate that the number of receivable PDSCHs is 1 or a larger number. Consequently, it is possible to reduce an overhead of a signaling that is necessary to give notification of the variable N.

Furthermore, the number of PDSCHs that the user terminal can receive may be notified as terminal capability (UE capability) in advance to the radio base station (gNB). For example, the number of PDSCHs may be notified as part of initial access, an RRC connection procedure or an RRC configuration from the UE to the gNB.

Furthermore, only PDSCH candidates of 14 symbols (Fig. 2B) and PDSCH candidates of 2 symbols (one of the PDSCH candidates illustrated in Fig. 2D) may be configured by RRC to the UE having terminal capability that makes it possible to receive one PDSCH (PDSCH candidate) in 1 slot, and may be dynamically switched.

Furthermore, the above-described present embodiment may be applied to a case where the mode of dynamically determining the HARQ-ACK codebook is configured (a case where the type 2 is determined). In this case, the UE can calculate the maximum number of PDSCHs that can be scheduled per slot, and the maximum number of ACK/NACK bits that need to be generated based on the terminal capability of the UE notified in advance.

In this case, when, for example, allocation of PDSCHs that exceed the maximum number of PDSCHs that can be scheduled per slot is detected, it is highly probable that DCI for scheduling at least part of PDSCHs are erroneously detected. Therefore, by generating all ACK/NACK bits that match the maximum number of PDSCHs that can be scheduled per slot as NACKs, it is possible to prevent a mismatch of recognition of a codebook size between the gNB and the UE that is caused by generating ACKs/NACKs corresponding to the number of pieces of erroneously detected DCI.

### (Radio Communication System)

The configuration of the radio communication system according to the present embodiment will be described below. This radio communication system is applied the radio communication method according to each of the above aspect. In addition, the radio communication method according to each of the above aspect may be applied alone or may be applied by combining at least two of the radio communication methods.

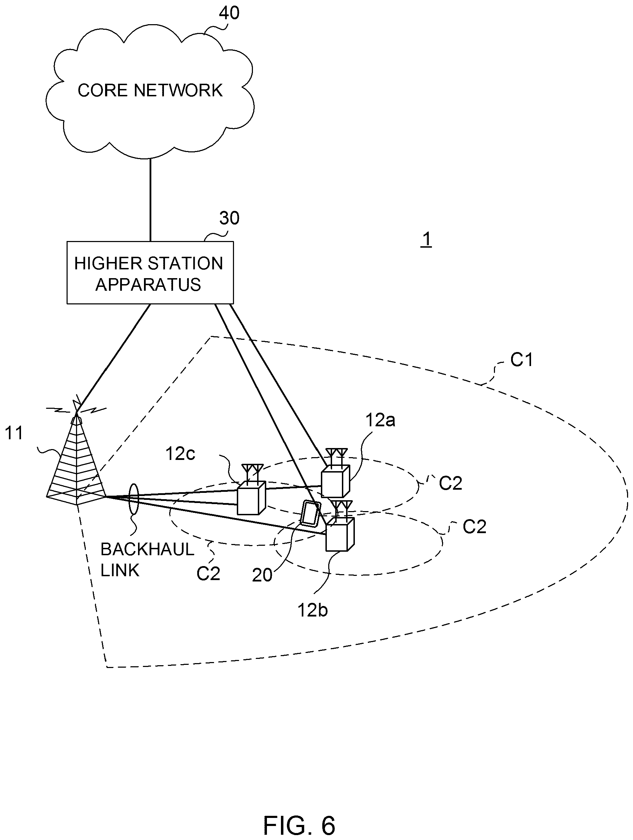

Fig. 6 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) or a New Radio Access Technology (NR: New-RAT).

The radio communication system 1 illustrated in Fig. 6 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells and/or in the cells.

In addition, the numerology is a communication parameter (e.g., at least one of a spacing of a subcarrier (subcarrier spacing), a bandwidth, a symbol length, a CP time duration (CP length), a subframe length, a TTI time duration (TTI length), the number of symbols per TTI, a radio frame configuration, filtering processing and windowing processing) in a frequency direction and/or a time direction. The radio communication system 1 may support subcarrier spacings such as 15 kHz, 30 kHz, 60 kHz, 120 kHz and 240 kHz.

The user terminal 20 can connect with both of the radio base station 11 and the radio base stations 12. The user terminal 20 is assumed to concurrently use the macro cell C1 and the small cells C2 that use different frequencies by CAor DC. Furthermore, the user terminal 20 can apply CA or DC by using a plurality of cells (CCs) (e.g., two CCs or more). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell. A TDD cell and an FDD cell may be referred to as a TDD carrier (frame configuration type 2) and an FDD carrier (frame configuration type 1), respectively.

Furthermore, each cell (carrier) may be applied a single numerology or may be applied a plurality of different numerologies.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB), a gNodeB (gNB) or a Transmission/Reception Point (TRP). Furthermore, each radio base station 12 is a radio base station that has a local coverage, and may be referred to as a small base station, a micro base station, a pico base station, a femto base station, a Home eNodeB (HeNB), a Remote Radio Head (RRH), an eNB, a gNB or a transmission/reception point. The radio base stations 11 and 12 will be collectively referred to as a radio base station 10 below when not distinguished.

Each user terminal 20 is a terminal that supports various communication schemes such as LTE, LTE-A, 5G and NR, and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to Downlink (DL) and can apply Single Carrier-Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and OFDMA may be used on UL.

Furthermore, the radio communication system 1 may use a multicarrier waveform (e.g., OFDM waveform), or may use a single carrier waveform (e.g., DFT-s-OFDM waveform).

The radio communication system 1 uses a downlink shared channel (also referred to as, for example, a PDSCH: Physical Downlink Shared Channel, a DL data channel or a DL shared channel) shared by each user terminal 20, a broadcast channel (PBCH: Physical Broadcast Channel) and an L1/L2 control channel as DL channels. User data, higher layer control information and a System Information Block (SIB) are conveyed on the PDSCH. Furthermore, a Master Information Block (MIB) is conveyed on the PBCH.

The L1/L2 control channel includes a DL control channel (a Physical Downlink Control Channel (PDCCH) or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH. The number of OFDM symbols used for the PDCCH is conveyed on the PCFICH. The EPDCCH is subjected to frequency division multiplexing with the PDSCH and is used to convey DCI similar to the PDCCH. Retransmission control information (ACK/NACK) of an HARQ for the PUSCH can be conveyed on at least one of the PHICH, the PDCCH and the EPDCCH.

The radio communication system 1 uses a UL shared channel (also referred to as, for example, a PUSCH: Physical Uplink Shared Channel or an uplink shared channel) shared by each user terminal 20, an uplink control channel (PUCCH: Physical Uplink Control Channel), and a random access channel (PRACH: Physical Random Access Channel) as UL channels. User data and higher layer control information are conveyed on the PUSCH. Uplink Control Information (UCI) including at least one of retransmission control information (A/N) and Channel State Information (CSI) of a DL signal is conveyed on the PUSCH or the PUCCH. A random access preamble for establishing connection with a cell can be conveyed on the PRACH.

### <Radio Base Station>

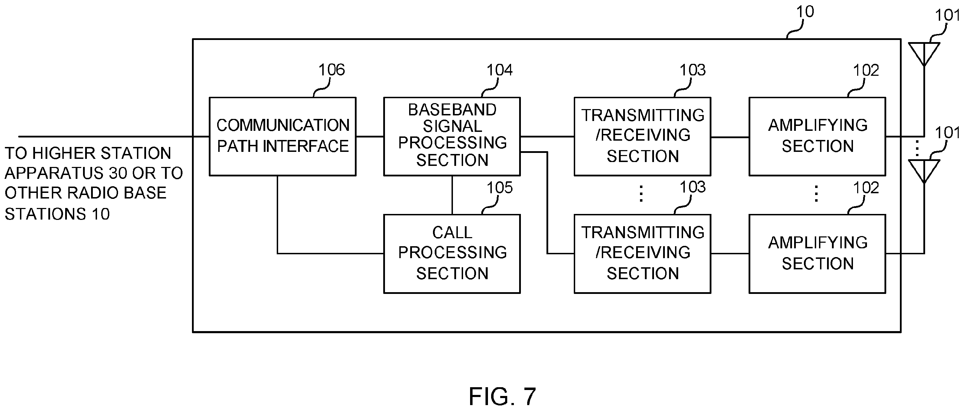

Fig. 7 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on DL is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101.

The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as a UL signal. Each transmission/reception section 103 receives the UL signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on UL data included in the input UL signal, and transfers the UL data to the higher station apparatus 30 via the channel interface 106. The call processing section 105 performs call processing such as a configuration and release of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmission/reception section 103 transmits a DL signal (including at least one of a DL data signal, a DL control signal and a DL reference signal) to the user terminal 20, and receives a UL signal (including at least one of a UL data signal, a UL control signal and a UL reference signal) from the user terminal 20.

Furthermore, each transmission/reception section 103 receives UCI from the user terminal 20 by using an uplink shared channel (e.g., PUSCH) or an uplink control channel (e.g., a short PUCCH and/or a long PUCCH). The UCI may include ACK/NACK (transmission (delivery) acknowledgement signal) for a PDSCH.

Furthermore, each transmission/reception section 103 may transmit information related to PDSCH candidates that can be scheduled to the UE by an L1 signaling such as an RRC signaling. Furthermore, each transmission/reception section 103 may give notification of, for example, the number of HARQ-ACK bits of a DL Assignment Index (DAI: Downlink Assignment Indicator (Index)) field included in downlink control information (e.g., DL assignment).

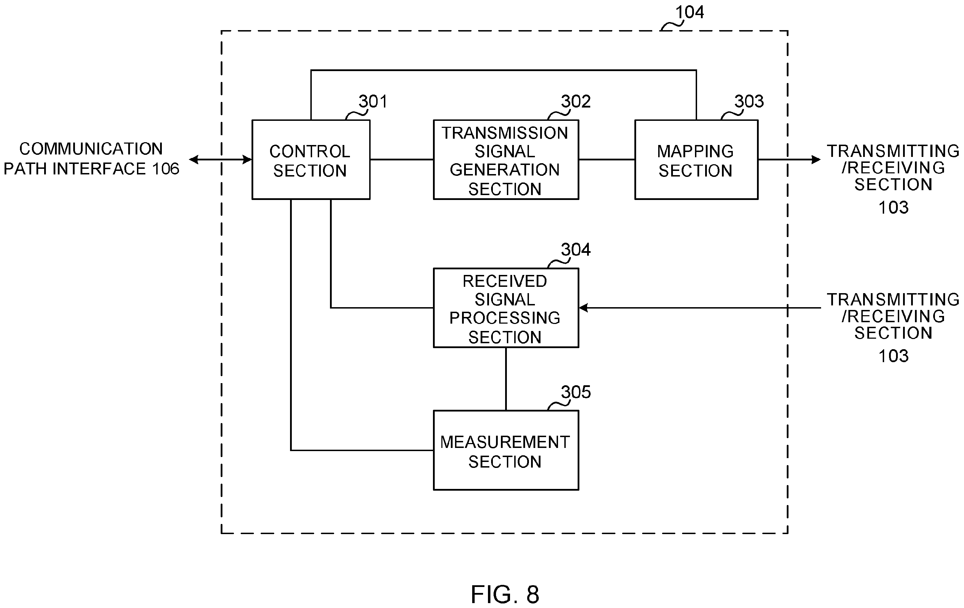

Fig. 8 is a diagram illustrating one example of a function configuration of the radio base station according to the present embodiment. In addition, Fig. 8 mainly illustrates function blocks of characteristic portions according to the present embodiment, and assumes that the radio base station 10 includes other function blocks, too, that are necessary for radio communication. As illustrated in Fig. 8, the baseband signal processing section 104 includes a control section 301, a transmission signal generating section 302, a mapping section 303, a received signal processing section 304 and a measurement section 305.

The control section 301 controls the entire radio base station 10. The control section 301 controls, for example, DL signal generation of the transmission signal generating section 302, DL signal mapping of the mapping section 303, UL signal reception processing (e.g., demodulation) of the received signal processing section 304, and measurement of the measurement section 305.

More specifically, the control section 301 schedules the user terminal 20. More specifically, the control section 301 may perform scheduling and/or retransmission control on the DL data and/or the uplink shared channel based on the UCI (e.g., the CSI and/or the BI) from the user terminal 20.

Furthermore, the control section 301 may control an uplink control channel (e.g., the long PUCCH and/or the short PUCCH) configuration (format), and perform control to transmit the control information related to the uplink control channel.

Furthermore, the control section 301 may control the received signal processing section 304 to transmit the information related to the PDSCH candidates that can be scheduled, to the UE by the L1 signaling such as the RRC signaling. Furthermore, the control section 301 may control the received signal processing section 304 to give notification of, for example, the number of HARQ-ACK bits of the DL Assignment Index (DAI: Downlink Assignment Indicator (Index)) field included in the downlink control information (e.g., DL assignment). Furthermore, the received signal processing section 304 may receive notification (information) of PDSCH reception capability in a given domain of the UE from the UE.

The control section 301 may control the received signal processing section 304 to perform the reception processing on the UCI from the user terminal 20 based on the uplink control channel format.

The control section 301 can be composed of a controller, a control circuit or a control apparatus described based on the common knowledge in the technical field according to the present invention.

The transmission signal generating section 302 generates a DL signal (such as a DL data signal, a DL control signal or a DL reference signal) based on an instruction from the control section 301, and outputs the DL signal to the mapping section 303.

The transmission signal generating section 302 can be composed of a signal generator, a signal generating circuit or a signal generating apparatus described based on the common knowledge in the technical field according to the present invention.

The mapping section 303 maps the DL signal generated by the transmission signal generating section 302, on given radio resources based on the instruction from the control section 301, and outputs the DL signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a UL signal (including, for example, a UL data signal, a UL control signal or a UL reference signal) transmitted from the user terminal 20. More specifically, the received signal processing section 304 outputs the received signal or the signal after the reception processing to the measurement section 305. Furthermore, the received signal processing section 304 performs the reception processing on the UCI based on the uplink control channel configuration instructed by the control section 301.

The measurement section 305 performs measurement related to the received signal. The measurement section 305 can be composed of a measurement instrument, a measurement circuit or a measurement apparatus described based on the common knowledge in the technical field according to the present invention.

The measurement section 305 may measure UL channel quality based on, for example, received power (e.g., Reference Signal Received Power (RSRP)) and/or received quality (e.g., Reference Signal Received Quality (RSRQ)) of the UL reference signal. The measurement section 305 may output a measurement result to the control section 301.

### <User Terminal>

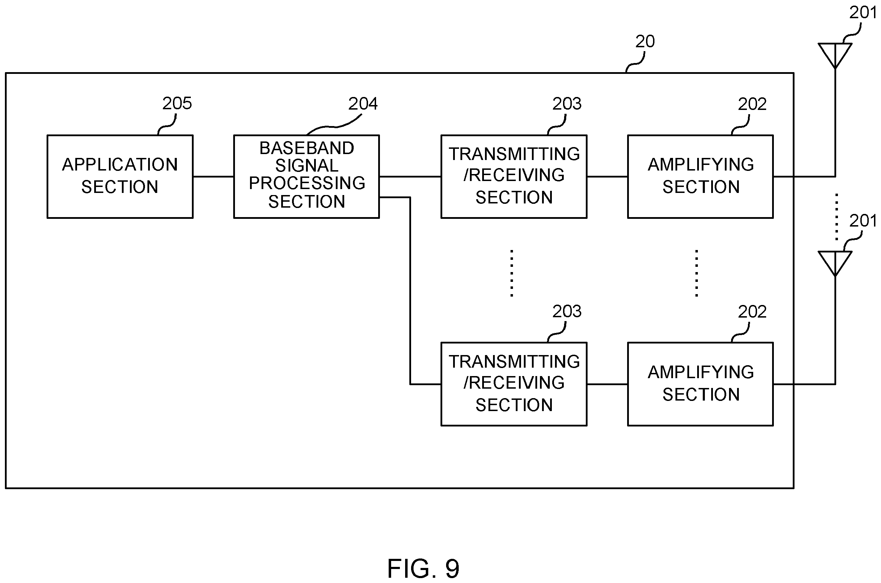

Fig. 9 is a diagram illustrating one example of an overall configuration of the user terminal according to the present embodiment. The user terminal 20 includes pluralities of transmission/reception antennas 201 for MIMO transmission, amplifying sections 202 and transmission/reception sections 203, a baseband signal processing section 204 and an application section 205.

The respective amplifying sections 202 amplify radio frequency signals received at a plurality of transmission/reception antennas 201. Each transmission/reception section 203 receives a DL signal amplified by each amplifying section 202. Each transmission/reception section 203 performs frequency conversion on the received signal into a baseband signal, and outputs the baseband signal to the baseband signal processing section 204.

The baseband signal processing section 204 performs FFT processing, error correcting decoding and retransmission control reception processing on the input baseband signal. The baseband signal processing section 204 transfers DL data to the application section 205. The application section 205 performs processing related to layers higher than a physical layer and an MAC layer. Furthermore, the baseband signal processing section 204 may transfer broadcast information, too, to the application section 205.

On the other hand, the application section 205 inputs UL data to the baseband signal processing section 204. The baseband signal processing section 204 performs retransmission control transmission processing (e.g., HARQ transmission processing), channel coding, rate matching, puncturing, Discrete Fourier Transform (DFT) processing and IFFT processing on the UL data, and transfers the UL data to each transmission/reception section 203. The baseband signal processing section 204 performs at least one of channel coding, rate matching, puncturing, DFT processing and IFFT processing on the UCI, too, and transfers the UCI to each transmission/reception section 203.

Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 receives the DL signal (including the DL data signal, the DL control signal (DCI) and the DL reference signal) of numerologies configured to the user terminal 20, and transmits the UL signal (including the UL data signal, the UL control signal and the UL reference signal) of the numerologies. Each transmission/reception section 203 may transmit the UL signal according to, for example, scheduling according to the above-described first to third aspects. When transmitting the UL signal, each transmission/reception section 203 may transmit the UL signal in a slot or mini slot unit.

Furthermore, each transmission/reception section 203 transmits the UCI to the radio base station 10 by using the uplink shared channel (e.g., PUSCH) or the uplink control channel (e.g., the short PUCCH and/or the long PUCCH).

Furthermore, each transmission/reception section 203 may receive information indicating the K PUCCH resource sets each including the M PUCCH resources. Furthermore, each transmission/reception section 203 may receive higher layer control information (higher layer parameter).

Furthermore, each transmission/reception section 203 may receive information related to the PDSCH candidates that can be scheduled, by the L1 signaling such as the RRC signaling. Furthermore, each transmission/reception section 203 may receive notification of, for example, the number of HARQ-ACK bits of the DL Assignment Index (DAI: Downlink Assignment Indicator (Index)) field included in the downlink control information (e.g., DL assignment).

The transmission/reception sections 203 can be composed as transmitters/receivers, transmission/reception circuits or transmission/reception apparatuses described based on the common knowledge in the technical field according to the present invention. Furthermore, the transmission/reception sections 203 may be composed as an integrated transmission/reception section or may be composed of transmission sections and reception sections.

Fig. 10 is a diagram illustrating one example of a function configuration of the user terminal according to the present embodiment. In addition, Fig. 10 mainly illustrates function blocks of characteristic portions according to the present embodiment, and assumes that the user terminal 20 includes other function blocks, too, that are necessary for radio communication. As illustrated in Fig. 10, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls, for example, UL signal generation of the transmission signal generating section 402, UL signal mapping of the mapping section 403, DL signal reception processing of the received signal processing section 404 and measurement of the measurement section 405.

Furthermore, the control section 401 controls the uplink control channel used for transmission of the UCI from the user terminal 20, based on an explicit instruction from the radio base station 10 and implicit determination in the user terminal 20. Furthermore, the control section 401 controls transmission of the UCI.

Furthermore, the control section 401 may control the uplink control channel (e.g., the long PUCCH and/or the short PUCCH) configuration (format). The control section 401 may control the uplink control channel format based on the control information from the radio base station 10. Furthermore, the control section 401 may control a PUCCH format (uplink control channel format) used for transmission of the UCI, based on information related to fallback.

Furthermore, the control section 401 may perform control to number the PDCCH candidates and determine the number of ACK/NACK bits according to the above-described embodiment. The control section 401 may control the received signal processing section 404 to receive the information related to the PDSCH candidates that can be scheduled, by the L1 signaling such as the RRC signaling. Furthermore, the control section 401 may control the received signal processing section 404 to receive notification of, for example, the number of HARQ-ACK bits of the DL Assignment Index (DAI: Downlink Assignment Indicator (Index)) field included in the downlink control information (e.g., DL assignment). Furthermore, the control section 401 may give notification of the PDSCH reception capability in the given domain of the UE from the UE.

The control section 401 according to the invention controls an information amount of a transmission acknowledgement signal for a downlink signal received via the PDSCH based on the PDSCH reception capability in the given domain of the own terminal, and the number of PDSCHs that can be scheduled in the given domain.

The PDCCH reception capability according to the invention indicates the number of PDSCHs that can be received in the given domain. Furthermore, the control section 401 according to the invention controls the information amount of the transmission acknowledgement signal such that the information amount is associated with a smaller number of the number of PDSCHs that can be received or the number of PDSCHs that can be scheduled.

The control section 401 can be composed of a controller, a control circuit or a control apparatus described based on the common knowledge in the technical field according to the present invention.

The transmission signal generating section 402 generates (e.g., encodes, rate-matches, punctures or modulates) a UL signal (including a UL data signal, a UL control signal, a UL reference signal or UCI) based on an instruction from the control section 401, and outputs the UL signal to the mapping section 403. The transmission signal generating section 402 can be composed of a signal generator, a signal generating circuit or a signal generating apparatus described based on the common knowledge in the technical field according to the present invention.

The mapping section 403 maps the UL signal generated by the transmission signal generating section 402, on radio resources based on the instruction from the control section 401, and outputs the UL signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the DL signal (the DL data signal, the scheduling information, the DL control signal or the DL reference signal). The received signal processing section 404 outputs information received from the radio base station 10 to the control section 401. The received signal processing section 404 outputs, for example, broadcast information, system information, higher layer control information of a higher layer signaling such as an RRC signaling and physical layer control information (L1/L2 control information) to the control section 401.

The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The measurement section 405 measures a channel state based on a reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

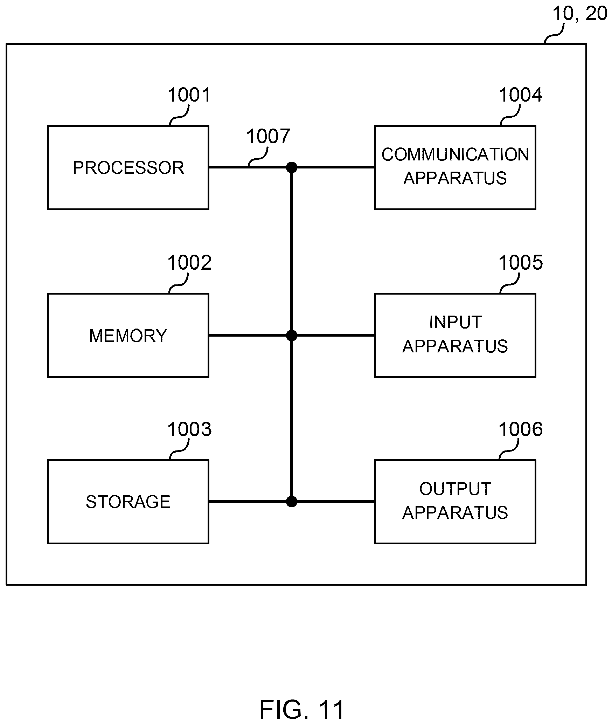

For example, the radio base station and the user terminal according to the one embodiment of the present invention may function as computers that perform processing of the radio communication method according to the present invention. Fig. 11 is a diagram illustrating one example of the hardware configurations of the radio base station and the user terminal according to the one embodiment of the present invention. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 11 or may be configured without including part of the apparatuses.

For example, Fig. 11 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Determination may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description can be interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a transmission/reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide a communication service in this coverage.

In this description, the terms "Mobile Station (MS)", "user terminal", "user apparatus (UE: User Equipment)" and "terminal" can be interchangeably used.

The mobile station will be also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

The base station and/or the mobile station may be referred to as a transmission apparatus and a reception apparatus.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the scope of the present invention defined by the recitation of the claims. Accordingly, the disclosure of this description is intended for exemplary explanation, and does not bring any restrictive meaning to the present invention.

## Claims

1. A terminal comprising:
a control section configured to control a number of bits for a transmission acknowledgement signal based on a capability that indicates a number of downlink shared channels receivable within one slot and a number of downlink shared channels schedulable within one slot; and
a transmitting section configured to transmit the transmission acknowledgement signal with the bits,
wherein the control section is configured to control the number of bits to correspond to a lower number between the number of downlink shared channels receivable and the number of downlink shared channels schedulable.

2. A radio communication method for a terminal, comprising:
controlling a number of bits for a transmission acknowledgement signal based on a capability that indicates a number of downlink shared channels receivable within one slot and a number of downlink shared channels schedulable within one slot; and
transmitting the transmission acknowledgement signal with the bits,
wherein the number of bits is controlled to correspond to a lower number between the number of downlink shared channels receivable and the number of downlink shared channels schedulable.

3. A system comprising the terminal of claim 1 and a base station, wherein the base station comprises:
a receiving section configured to receive the transmission acknowledgement signal.

## Patentansprüche

1. Endgerät, umfassend:
einen Steuerabschnitt, konfiguriert, um ein Anzahl an Bits für ein Übertragungsbestätigungssignal auf Grundlage einer Fähigkeit zu steuern, die eine Anzahl von innerhalb eines Slots zulssigen gemeinsam genutzten Abwärtsstreckenkanälen und eine Anzahl von innerhalb eines Slots planbaren gemeinsam genutzten Abwärtsstreckenkanälen angibt; und
einen Übertragungsabschnitt, konfiguriert, um das Übertragungsbestätigungssignal mit den Bits zu übertragen,
wobei der Steuerabschnitt konfiguriert ist, um die Anzahl an Bits zu steuern, um einer niedrigeren Anzahl zwischen der Anzahl von zulssigen gemeinsam genutzten Abwärtsstreckenkanälen und der Anzahl von planbaren gemeinsam genutzten Abwärtsstreckenkanälen zu entsprechen.

2. Funkkommunikationsverfahren für ein Endgerät, umfassend:
Steuern einer Anzahl von Bits für ein Übertragungsbestätigungssignal auf Grundlage einer Fähigkeit, die eine Anzahl von innerhalb eines Slots zulssigen gemeinsam genutzten Abwärtsstreckenkanälen und eine Anzahl von innerhalb eines Slots planbaren gemeinsam genutzten Abwärtsstreckenkanälen angibt; und
Übertragen des Übertragungsbestätigungssignals mit den Bits,
wobei die Anzahl an Bits gesteuert wird, um einer niedrigeren Anzahl zwischen der Anzahl von zulssigen gemeinsam genutzten Abwärtsstreckenkanälen und der Anzahl von planbaren gemeinsam genutzten Abwärtsstreckenkanälen zu entsprechen.

3. System, umfassend das Endgerät nach Anspruch 1 und eine Basisstation, wobei die Basisstation umfasst:
einen Empfangsabschnitt, konfiguriert, um das Übertragungsbestätigungssignal zu empfangen.

## Revendications

1. Terminal comprenant :
une section de commande configurée pour commander un nombre de bits pour un signal de reconnaissance de transmission sur la base d'une capacité qui indique un nombre de canaux partagés en liaison descendante pouvant être reçus dans un créneau et un nombre de canaux partagés en liaison descendante pouvant être programmés dans un créneau ; et
une section de transmission configurée pour transmettre le signal de reconnaissance de transmission avec les bits,
dans lequel la section de commande est configurée pour commander le nombre de bits pour correspondre à un nombre inférieur entre le nombre de canaux partagés en liaison descendante pouvant être reçus et le nombre de canaux partagés en liaison descendante pouvant être programmés.

2. Procédé de communication radio pour un terminal, comprenant les étapes consistant à :
commander un nombre de bits pour un signal de reconnaissance de transmission sur la base d'une capacité qui indique un nombre de canaux partagés en liaison descendante pouvant être reçus dans un créneau et un nombre de canaux partagés en liaison descendante pouvant être programmés dans un créneau ; et
transmettre le signal de reconnaissance de transmission avec les bits,
dans lequel le nombre de bits est commandé pour correspondre à un nombre inférieur entre le nombre de canaux partagés en liaison descendante pouvant être reçus et le nombre de canaux partagés en liaison descendante pouvant être programmés.

3. Système comprenant le terminal selon la revendication 1 et une station de base, dans lequel
la station de base comprend :
une section de réception configurée pour recevoir le signal de reconnaissance de transmission.
